# EUROPEAN PATENT SPECIFICATION

(11) **EP 4 482 179 B1**
(45) Date of publication and mention of the grant of the patent: **25.02.2026**
(21) Application number: 23781245.8
(22) Date of filing: 24.03.2023
(51) Int. Cl.: H04W 4/06, H04W 76/40, H04W 76/12, H04L 65/00

(54) **METHOD AND DEVICE FOR PROVIDING BROADCAST SERVICE IN WIRELESS COMMUNICATION SYSTEM**
VERFAHREN UND VORRICHTUNG ZUR BEREITSTELLUNG EINES RUNDFUNKDIENSTES IN EINEM DRAHTLOSKOMMUNIKATIONSSYSTEM
PROCÉDÉ ET DISPOSITIF DESTINÉS À FOURNIR UN SERVICE DE DIFFUSION DANS UN SYSTÈME DE COMMUNICATION SANS FIL

(30) Priority: 28.03.2022 KR 20220037958
(43) Date of publication of application: 25.12.2024
(73) Proprietor: Samsung Electronics Co., Ltd, Suwon-si, Gyeonggi-do 16677 (KR)
(72) Inventor: BAEK, Youngkyo, Suwon-si Gyeonggi-do 16677 (KR)
(74) Representative: Gulde & Partner
(86) International application number: PCT/KR2023/003917
(87) International publication number: WO 2023/191389

(56) References cited:
- WO-A1-2021/163260
- WO-A1-2021/191802
- WO-A1-2021/224296
- CN-A- 114 095 989
- ERICSSON: "Update [7.3] Broadcast to Resolve ENs about AMF involvement", vol. SA WG2, no. Electronic, Elbonia; 20210517 - 20210528, 10 May 2021 (2021-05-10), XP052004298, Retrieved from the Internet <URL:https://ftp.3gpp.org/tsg_sa/WG2_Arch/TSGS2_145E_Electronic_2021-05/Docs/S2-2103957.zip S2-2103957_23247_[7.3]_Broadcast Resolving EN about AMF Involvement.doc> [retrieved on 20210510]
- NOKIA ET AL: "Broadcast Frequency selection Identifier", vol. SA WG2, no. Elbonia; 20211115 - 20211119, 8 November 2021 (2021-11-08), XP052076808, Retrieved from the Internet <URL:https://ftp.3gpp.org/tsg_sa/WG2_Arch/TSGS2_148E_Electronic_2021-11/Docs/S2-2108965.zip S2-2108965 CR_TS23247 Broadcast frequency selection ID.docx> [retrieved on 20211108]
- INTEL CORPORATION: "Group notification and RACH congestion", 3GPP DRAFT; R2-2104875, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic meeting; 20210519 - 20210527, 11 May 2021 (2021-05-11), Mobile Competence Centre ; 650, route des Lucioles ; F-06921 Sophia-Antipolis Cedex ; France , XP052006618

## Description

### [Technical Field]

The disclosure relates to a wireless communication system and, more particularly, to a method and a device for efficiently transmitting broadcast data in a 5G network.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multibeam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources. Document: ERICSSON: "Update [7.3] Broadcast to Resolve ENs about AMF involvement",3GPP DRAFT; S2-2103957, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. SA WG2, no. Electronic, Elbonia, (2021-05-10), discloses similar aspects.

With the advance of mobile communication systems as described above, various services can be provided, and accordingly there is a need for ways to effectively provide these services, in particular, ways to efficiently transmit broadcast data.

### [Disclosure of Invention]

### [Technical Problem]

A disclosed embodiment may provide a method and a device capable of effectively providing a service in a wireless communication system.

### [Solution to Problem]

According to an embodiment of the disclosure, a method performed by a multicast/broadcast session management function (MB-SMF) in a wireless communication system may include: assigning a first temporary mobile group identity (TMGI) for a broadcast service to an application function (AF); receiving, from the AF, a multicast and broadcast services (MBS) session generation request message corresponding to the first TMGI, wherein the MBS session generation request message including the first TMGI and at least one of an ID of the broadcast service or a second TMGI list for an identical broadcast service as the first TMGI; transmitting, to the AF, a response message regarding the MBS session generation request message; transmitting, to an access and mobility management function (AMF), a broadcast session context generation request message, wherein the broadcast session context generation request message including the first TMGI and at least one of the ID of the broadcast service or the second TMGI list; receiving a response message from a base station through the AMF, wherein the response message including a primary TMGI to be used by the base station to provide the broadcast service; determining whether the base station is allowed to provide a broadcast service through the primary TMGI; controlling a tunnel to be generated between the base station and an MB-user plane function (UPF) for providing the broadcast service, based on the determination result; and providing, to the AF, a response message including the primary TMGI. The primary TMGI may be selected by the base station, based on the first TMGI and at least one of the ID of the broadcast service or the second TMGI list.

The first TMGI may include information regarding a user providing the broadcast service, and the base station may be a radio access network (RAN) sharing NG-RAN or multi-operator core network (MOCN) NG-RAN.

In the determining of whether the base station is allowed to provide a broadcast service through the primary TMGI, an MBS session management (SM) policy update procedure may be performed with a policy control function (PCF) or MB-PCF to determine whether the broadcast service is allowed through the primary TMGI.

The broadcast session context generation request message may include information regarding an MBS service area and, in case that data is transmitted from the MB-UPF to the base station by multicast, a lower layer source specific IP multicast (LL SSM) address.

A TMGI used to provide the broadcast service by an operator who owns the base station, an operator deemed to provide the broadcast service to a larger number of user terminals in an MBS service area among operators who share the base station, or an operator having the highest degree of importance among operators who share the base station, may be selected as the primary TMGI.

According to an embodiment of the disclosure, a method performed by a base station in a wireless communication system may include: receiving, from an access and mobility management function (AMF), an N2 message request based on a multicast and broadcast services (MBS) session generation request of a multicast/broadcast session management function (MB-SMF), wherein the N2 message request including a first temporary mobile group identity (TMGI) for a broadcast service and at least one of an ID of the broadcast service or a second TMGI list for an identical broadcast service as the first TMGI; selecting a primary TMGI to be used to provide the broadcast service, based on the first TMGI and at least one of the ID of the broadcast service or the second TMGI list; transmitting, to the AMF, an N2 message response including the primary TMGI; and receiving data corresponding to the broadcast service, based on the primary TMGI.

The first TMGI may include information regarding a user providing the broadcast service, and the base station may be a radio access network (RAN) sharing NG-RAN or multi-operator core network (MOCN) NG-RAN.

The N2 message response may include information regarding a tunnel between the base station and an MB-user plane function (UPF) for receiving data corresponding to the broadcast service to the base station, and data may not be received from the MB-UPF through a TMGI not selected as the primary TMGI.

The method may further include transmitting, to at least one terminal, an MBS service announcement, wherein the MBS service announcement including at least one of the ID of the broadcast service, the primary TMGI, or location information of the base station.

A TMGI used to provide the broadcast service by an operator who owns the base station, an operator deemed to provide the broadcast service to a larger number of user terminals in an MBS service area among operators who share the base station, or an operator having the highest degree of importance among operators who share the base station, may be selected as the primary TMGI.

According to an embodiment of the disclosure, a multicast/broadcast session management function (MB-SMF) device of a wireless communication system may include a transceiver and at least one processor. The at least one processor may be configured to: assign a first temporary mobile group identity (TMGI) for a broadcast service to an application function (AF), receive, from the AF, a multicast and broadcast services (MBS) session generation request message corresponding to the first TMGI, wherein the MBS session generation request message including the first TMGI and at least one of an ID of the broadcast service or a second TMGI list for an identical broadcast service as the first TMGI, transmit, to an access and mobility management function (AMF), a response message regarding the MBS session generation request message to the AF, transmit a broadcast session context generation request message, wherein the broadcast session context generation request message including the first TMGI and at least one of the ID of the broadcast service or the second TMGI list, receive a response message from a base station through the AMF, the response message including a primary TMGI to be used by the base station to provide the broadcast service, determine whether the base station is allowed to provide a broadcast service through the primary TMGI; control a tunnel to be generated between the base station and an MB-user plane function (UPF) for providing the broadcast service, based on the determination result; and provide, to the AF, a response message including the primary TMGI. The primary TMGI may be selected by the base station, based on the first TMGI and at least one of the ID of the broadcast service or the second TMGI list.

The first TMGI may include information regarding a user providing the broadcast service, and the base station may be a radio access network (RAN) sharing NG-RAN or multi-operator core network (MOCN) NG-RAN.

The at least one processor may be configured to perform an MBS session management (SM) policy update procedure with a policy control function (PCF) or MB-PCF to determine whether the broadcast service is allowed through the primary TMGI.

The broadcast session context generation request message may include information regarding an MBS service area and, in case that data is transmitted from the MB-UPF to the base station by multicast, a lower layer source specific IP multicast (LL SSM) address.

A base station of a wireless communication system may include a transceiver and at least one processor. The at least one processor may be configured to: receive, from an access and mobility management function (AMF) an N2 message request based on a multicast and broadcast services (MBS) session generation request of a multicast/broadcast session management function (MB-SMF), wherein the N2 message request including a first temporary mobile group identity (TMGI) for a broadcast service and at least one of an ID of the broadcast service or a second TMGI list for an identical broadcast service as the first TMGI, select a primary TMGI to be used to provide the broadcast service, based on the first TMGI and at least one of the ID of the broadcast service or the second TMGI list; transmit, to the AMF, an N2 message response including the primary TMGI, and receive data corresponding to the broadcast service, based on the primary TMGI.

### [Advantageous Effects of Invention]

A disclosed embodiment provides a method and a device capable of effectively providing a service in a wireless communication system.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a 5G system structure for a broadcast service in a wireless communication system according to an embodiment of the disclosure.
FIG. 2 illustrates a situation wherein identical information overlaps when an identical broadcast service is provided through an NG-RAN that conducts RAN sharing in a wireless communication system, which is to be solved by an embodiment of the disclosure.
FIG. 3 illustrates a process for generating a broadcast session for a broadcast service in a wireless communication system according to an embodiment of the disclosure.
FIG. 4 illustrates processes of a method wherein, when an identical broadcast service is provided through an NG-RAN that conducts RAN sharing in a wireless communication system according to an embodiment of the disclosure, and when a broadcast session for a broadcast service is generated, the NG-RAN is prevented from sending overlapping broadcast data.
FIG. 5 illustrates processes of another method wherein, when an identical broadcast service is provided through an NG-RAN that conducts RAN sharing in a wireless communication system according to an embodiment of the disclosure, and when a broadcast session for a broadcast service is generated, the NG-RAN is prevented from sending overlapping broadcast data.
FIG. 6 illustrates processes of a method wherein, when an identical broadcast service is provided through an NG-RAN that conducts RAN sharing in a wireless communication system according to an embodiment of the disclosure, and when the NG-RAN is prevented from sending overlapping broadcast data when generating a broadcast session for a broadcast service, a UE is enabled to continuously receive the broadcast service even in the NG-RAN that conducts RAN sharing.
FIG. 7 is a block diagram illustrating a structure of a UE according to an embodiment of the disclosure.
FIG. 8 is a block diagram illustrating a structure of a base station according to an embodiment of the disclosure.
FIG. 9 is a block diagram illustrating a structure of a network entity according to an embodiment of the disclosure.

### [Mode for the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description of the disclosure, terms and names defined in LTE and NR standards, which are the latest standards specified by the 3rd generation partnership project (3GPP) group among the existing communication standards, will be used for the sake of descriptive convenience. However, the disclosure is not limited by these terms and names, and may be applied in the same way to systems that conform other standards. In particular, the disclosure may be applied to 3GPP NR (5th generation mobile communication standard). In addition, embodiments of the disclosure may also be applied to other communication systems having similar technical backgrounds or channel types. In addition, based on determinations by those skilled in the art, the embodiments of the disclosure may be applied to other communication systems through some modifications without significantly departing from the scope of the disclosure.

Hereinafter, the disclosure relates to a wireless communication system. When multiple operators share an NG-RAN in a wireless communication system that supports a broadcast service, that is, when an NG-RAN is shared in a multi-operator core network (MOCN) type, and if each operator provides the same service from the same broadcast service provider, the same broadcast data may be transmitted multiple times for the same service in the NG-RAN, thereby wasting resources in radio ranges. Accordingly, a technology for saving resources by reducing overlapping broadcast data transmission to UEs will be described.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications.

Hereinafter, a broadcast service will be described. In order to provide a broadcast service, a 5G system (5GS) may receive broadcast service data from an application function (AF) or content provider and may deliver the same to a new generation-radio access network (NG-RAN), thereby sending broadcast service data to UEs at desired locations. According to an embodiment of the disclosure, the NG-RAN may include a base station. The 5G core network delivers broadcast data to the NG-RAN (base station of the 5G network) through shared delivery. That is, if the NG-RAN has multicast/broadcast service (MBS) capability, broadcast service data may be sent from a multicast/broadcast user plane function (MB-UPF) that provides a broadcast service to the NG-RAN through a tunnel for shared delivery.

If the NG-RAN conducts RAN sharing between multiple operators as a MOCN, and if the content provider provides the same broadcast service with regard to respective operators, the NG-RAN may receive the same broadcast data from the MB-UPF of the core network of each operator and may broadcast each piece of received broadcast data, based on the temporary mobile group identity (TMGI) assigned in each operator's network. Accordingly, there is a problem in that, in the case of the NG-RAN that conducts RAN sharing, resources are wasted because the same broadcast data is overlapped and transmitted to UEs with regard to each operator. The disclosure is intended to solve the above-mentioned problem.

Devices and methods according to various embodiments of the disclosure described hereinafter may enable UEs to continuously use a broadcast service, even in an NG-RAN that conducts RAN sharing, while reducing resource usage, when the same broadcast service is provided by operators in an NG-RAN that conducts RAN sharing between operators in a 5G system (5GS).

When multiple operators share an NG-RAN in a wireless communication system that supports a broadcast service, that is, when an NG-RAN is shared in a multi-operator core network (MOCN) type, and if each operator provides the same service from the same broadcast service provider, the same broadcast data may be transmitted multiple times for the same service in the NG-RAN, thereby wasting resources in radio ranges. Therefore, the disclosure provides a method for providing a broadcast service while saving resources by reducing overlapping broadcast data transmission to UEs.

In addition, the disclosure provides a method and a device for enabling UEs to continuously receive pieces of broadcast data from NG-RANs that conduct RAN sharing in a wireless communication system.

Advantageous effects obtainable from the disclosure may not be limited to the above-mentioned effects, and other effects which are not mentioned may be clearly understood from the following descriptions by those skilled in the art to which the disclosure pertains.

Furthermore, in the following description, terms and names defined in the 5G system standards are used for the sake of descriptive convenience. However, the disclosure is not limited by these terms and names, and may be applied in the same way to systems that conform other standards.

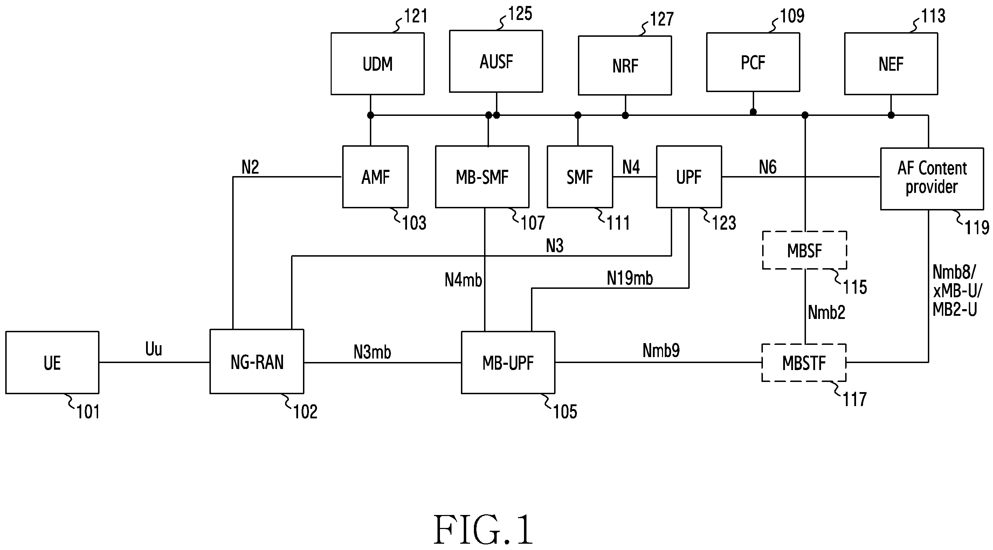

FIG. 1 illustrates a 5G system (5GS) structure for a broadcast service in a wireless communication system according to an embodiment of the disclosure.

Referring to FIG. 1, the 5GS may include user equipment (UE) 101, an NG-RAN 102 (base station), an access and mobility management function (AMF) device 103, a multicast/broadcast user plane function (MB-UPF) device 105, a multicast/broadcast-session management function (MB-SMF) device 107, a policy control function (PCF) device 109, a session management function (SMF) device 111, a network exposure function (NEF) device 113, a multicast/broadcast service function (MBSF) device 115, a multicast/broadcast service traffic function (MBSTF) device 117, an application function (AF) device or content provider 119, a unified data management (UDM) device 121, a user plane function (UPF) device 123, an authentication server function (AUSF) device 125, and an NF repository function (NRF) device 127. Obviously, the above example is not limitative, and the 5GS may include a smaller or larger number of components than those illustrated in FIG. 1. In addition, each device may be referred to as a network entity, network function, or network function apparatus.

Referring to FIG. 1, respective network functions (NFs) of the 5GS will be described as "network entities" or "network functions" themselves. However, those skilled in the art will understand that NF and/or NF devices may be implemented in one specific server or two or more servers, and two or more NFs that perform the same operation may be implemented in one server.

In addition, according to an embodiment of the disclosure, one NF or two or more NFs may be implemented as one network slice, depending on the case. A network slice may be generated based on a specific purpose. For example, a network slice may be configured for a subscriber group in order to provide specific subscriber groups with the same type of service, for example, the maximum transmission rate, the amount of data usage, the minimum transmission rate guaranteed, and the like. Furthermore, network slices may be implemented according to various purposes. Network slices are obvious to those skilled in the art, and further descriptions thereof will be omitted herein.

Referring to FIG. 1, FIG. 1 illustrates interfaces between respective nodes. A Uu interface may be used between the UE 101 and the NG-RAN 102, an N2 interface may be used between the NG-RAN 102 and the AMF 103, an N3 interface may be used between the NG-RAN 102 and the UPF 123, and an N3mb interface may be used between the NG-RAN 102 and the MB-UPF 105. In addition, an N4mb interface may be used between the MB-UPF 105 and the MB-SMF 107, and an N19mb interface may be used between the MB-UPF 105 and the UPF 123. An N4 interface may be used between the SMF 111 and the UPF 123, an N6 interface may be used between the UPF 123 and the AF 119, and an Nmb2 interface may be used between the MBSF 122 and the MBSTF 121. In addition, an Nmb9 interface may be used between the MB-UPF 115 and the MBSTF 117. Furthermore, an Mmb8/xMB-U/MB2 interface may be used between the AF 119 and the MBSTF 117. The above-described interfaces are defined in NR standard specifications, and further descriptions thereof will be omitted herein.

In general, in order to support a broadcast service in a 5GS, the following network function (NF) devices and services may constitute a cellular system for the broadcast service.

According to an embodiment of the disclosure, the AF 119 may be, for example, a V2X application server, a cellular Internet of things (CIoT) application server, a mission-critical push-to-talk (MCPTT) application, a content provider, a TV or audio service provider, a streaming video service provider, or the like.

In addition, the AF 119 may request the MBSF 115, which is an NF configured to manage the session of an MBS service and control traffic in order to provide an MBS service, to provide an MBS service. The MBSF 115 may be an NF which receives the request for an MBS service from the AF 119, manages the MBS service session, and controls the MBS service traffic. In addition, the MBSTF 117 may be an NF configured to receive media from an AF which provides the MBS under the control of the MBSF 115, from an application server (AS) which provides the MBS, or from a content provider and process media traffic, and may operate as an MBS service anchor in the 5GS.

Alternatively, in a 5G core network (5GC), an MBS system may be configured and operated without including the MBSF 115 and the MBSTF 117. When the MBSF 115 and the MBSTF 117 are not included, the AF 119 may request the MB-SMF 107 to provide the MBS service directly or through the NEF 113. In this connection, MBS data may be provided from the AS that provides the MBS, or from the content provider to the 5G network through the MB-UPF 105.

In the disclosure, the AF 119 may be an application server (AS) for providing a specific broadcast application service. Therefore, it may be understood in the following that the AS is identical to the AF 119, or that the AF 119 and the AS coexist. The AF 119 may transmit a request for providing an MBS service to the UE 101 to the MBSF 115 in order to provide the MBS service. The MBSF 115 may then control the MBSTF 117 (an MBS service media anchor in the 5GS, which transmits MBS service traffic to the UE 101) such that the MBS service is provided to the UE 101. In this regard, the MBS service may refer to data based on a multicast/broadcast service received from a specific content provider.

According to an embodiment, the MBSF 115 and the MBSTF 117 may be integrated and configured as one entity or one NF. In addition, according to an embodiment of the disclosure, the MBSTF 117 may be configured to be integrated with the NEF 113 or another NF. In addition, according to an embodiment of the disclosure, in the 5GS, the AF 119 may directly send an MBS service request to the MB-SMF 107 without the MBSF 115 and the MBSTF 117, and the MB-UPF 105 may receive media from a content provider which is an AS or AF 119 and then forward traffic.

According to an embodiment of the disclosure, the MBS service is managed through the MBSF 115 and the MBSTF 117, and service traffic occurs. If the service traffic is delivered to the UE 101 through broadcast, the multicast/broadcast service function (MBSF) 115 may manage the MBS service, the MB-SMF may assign an MBS session, and the multicast/broadcast service transport function (MBSTF) 117 may be a media anchor of the MBS traffic. That is, the MBSF 115 may be a control plane that manages the MBS service, and the MBSTF 117 may correspond to a user plane that handles MBS traffic.

Meanwhile, in the following disclosure, a "multimedia broadcast-multicast service gateway-control plane (MBMS-GW-C) service" may refer to a control function or service for generating MBS context regarding an MBS PDU session, managing the MBS session, and delivering traffic of the MBS session to the NG-RAN 102 (base station) through IP multicast, as a whole.

The MBMS-GW-C service may be integrated with the existing SMF 111 which manages a unicast PDU session and thus configured as an SMF 111 having an MBS session control function, or may be configured as a separate NF. An NF which supports the MBMS-GW-C service and also has the existing SMF function will be referred to as an MB-SMF 107 in the disclosure.

In addition, a service for delivering traffic received from the MB-UPF 105 according to MBS context regarding the MBS PDU session to the NG-RAN 102 which performs multicast/broadcast according to the MBMS-GW-C service through IP multicast will be referred to as a multimedia broadcast-multicast service gateway - user plane (MBMS-GW-U) service.

The MBMS-GW-U service may be configured by using a UPF which is integrated with the existing UPF configured to process a unicast PDU session, thereby having a function of delivering MBS traffic to an appropriate NG-RAN 102 through IP multicast, or by using a separate NF as illustrated in FIG. 1. Therefore, in the following disclosure, an NF which supports the MBMS-GW-U service, and which also has the existing UPF function, will be referred to as an MB-UPF 105.

The MBMS-GW-C service may use the above-described N4mb interface in order to control the MBMS-GW-U service.

In connection with describing various embodiments of the disclosure, the MBMS-GW-C and the MBMS-GW-U will be referred to as the MB-SMF 107 and the MB-UPF 105, respectively, for convenience of description.

MBS traffic may be delivered from the MBMS-GW-U (or MB-UPF) to NG-RANs 102. For example, MBS traffic may be delivered to the NG-RAN 102 by using IP multicast, or may be delivered to the NG-RAN 102 by using a unicast tunnel. In this regard, the tunnel between the MBMS-GW-U (or MB-UPF) and the NG-RAN 102 is referred to as a shared delivery tunnel. In the following description, the shared delivery tunnel may also be referred to as a shared tunnel for convenience of description.

In order to configure the shared delivery tunnel, the MBMS-GW-C (or MB-SMF) may send a control message to the NG-RAN 102 through the AMF 103.

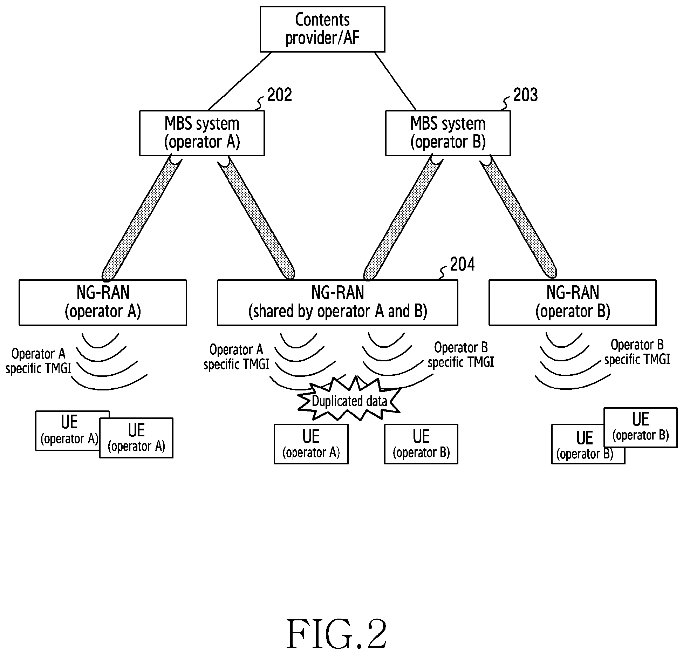

FIG. 2 illustrates a situation wherein identical information overlaps when an identical broadcast service is provided through an NG-RAN that conducts RAN sharing in a wireless communication system, which is to be solved by an embodiment of the disclosure.

FIG. 2 illustrates a situation wherein a broadcast service is executed through an MBS system through operator A 202, and the same broadcast service is executed through an MBS system through operator B 203. In the case of the NG-RAN 204 in which operator A 202 and operator B 203 have RAN sharing with each other, overlapping data is actually broadcast through operator A and operator B. The disclosure seeks to solve the problem of resource waste caused by overlapping of the same broadcast data.

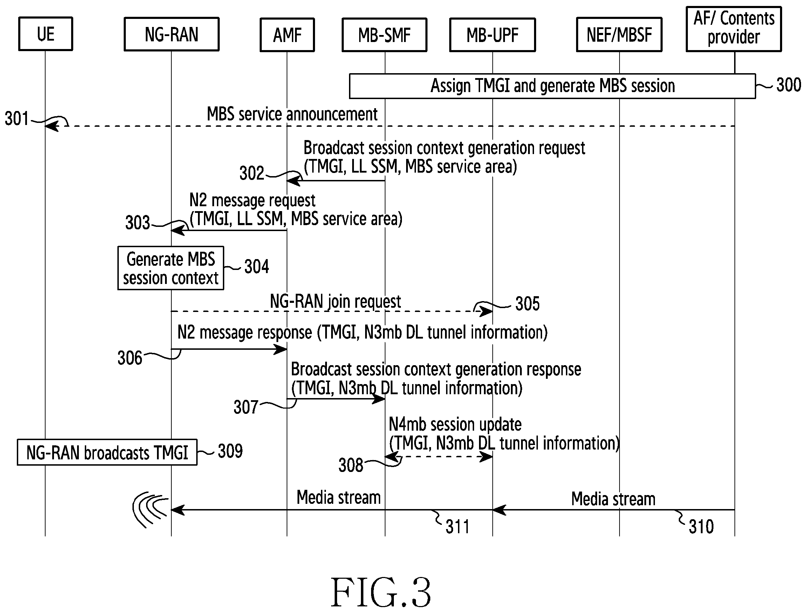

FIG. 3 illustrates a process for generating a broadcast session for a broadcast service in a wireless communication system according to an embodiment of the disclosure.

In step 300, in order to generate a broadcast session for a broadcast service, the AF may have a TMGI assigned thereto by the MB-SMF through the NEF, and may request the MB-SMF to generate an MBS session with regard to the TMGI.

In step 301, the AF may send an MBS service announcement message to UEs, thereby delivering information for receiving a broadcast service.

Upon receiving the request for generation of an MBS session for a broadcast service, the MB-SMF may transmit a broadcast session context generation request message (Namf_MBSBroadcast_ContextCreate request message) including TMGI information for selecting an NG-RAN corresponding to the MBS service area to the AMF in step 302. The broadcast session context generation request message may include a lower layer source specific IP multicast (LL SSM) address if the MB-UPF transmits data to NG-RANs through multicast. In addition, the broadcast session context generation request message may include an MBS service area.

In step 303, the AMF may transmit an N2 message request to the NG-RAN by using the message received from the MB-SMF. Accordingly, in step 304, the NG-RAN may generate MBS session context for a broadcast service. In addition, if LL SSM information has been received from the MB-SMF through steps 302 and 303, an NG-RAN joint request may be made in order to receive broadcast service data from the MB-UPF through multicast as in step 305 (for example, Internet group management protocol (IGMP)/multicast listener discovery (MLD) join).

Through steps 306 and 307, the NG-RAN may send a response regarding steps 302 and 303 to the MB-SMF through the AMF and may send TMGI information and information of an N3mb DL tunnel for receiving data to the NG-RAN, thereby making a tunnel for delivering broadcast service data between the NG-RAN and the MB-UPF as in step 308 (for example, N4mb session update). Meanwhile, the NG-RAN broadcasts TMGI information for a broadcast service as in step 309.

The NG-RAN may receive broadcast service data (media stream) from the content provider through the MB-UPF according to information generated with regard to the TMGI, and may broadcast the same to UEs, as in steps 310 and 311. Respective operations in FIG. 3 may include operations that serve as a basis in connection with describing following embodiments. That is, in the following drawings, operations in FIG. 3, which consider the NG-RAN that conducts RAN sharing, will be excluded, and only differences of respective embodiments will be described. Therefore, content not included in descriptions of embodiments of the disclosure operates based on FIG. 3.

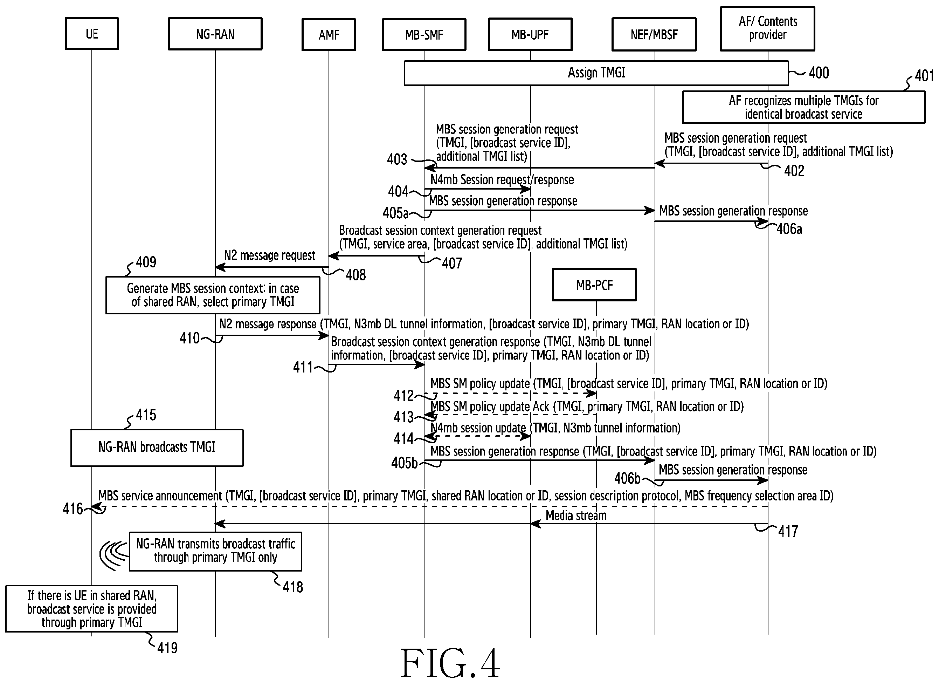

FIG. 4 illustrates processes of a method wherein, when an identical broadcast service is provided through an NG-RAN that conducts RAN sharing in a wireless communication system according to various embodiments of the disclosure, and when a broadcast session for a broadcast service is generated, the NG-RAN is prevented from sending overlapping broadcast data.

In step 400, the AF may have a TMGI assigned thereto by the MB-SMF through the NEF in order to generate a broadcast session for a broadcast service.

Meanwhile, as in step 401, before requesting the MB-SMF to provide an MBS session with regard to a TMGI, the AF may recognize that the same broadcast service is also provided in other operators' networks, and may know TMGI values used by respective operators. That is, the AF may identify the list value of TMGIs for providing a broadcast service.

For reference, a TMGI may include information of a user who provides a broadcast service, for example, the ID of a PLMN. Therefore, the TMGI may be information indicating through which operator the broadcast service is provided.

The AF may define a broadcast service ID value for indicating a broadcast service, regardless of the operator's network, separately from the TMGI value for indicating a broadcast service with regard to each operator network.

In steps 402 and 403, the AF may request the MB-SMF to generate an MBS session with regard to the TMGI through the NEF in the corresponding operator network. That is, an MBS session is requested with regard to the TMGI through an MBS session generation request message (Nnef_MBSSession_Create request and Nmbsmf_MBSSession_Create request). To this end, the MBS session generation request message may include a TMGI and at least one of a broadcast service ID or a list of TMGIs that provide the same broadcast service in other networks. The TMGI list may include the TMGI of the pertinent operator network or may not include the same.

Particularly, the broadcast service ID and the TMGI list may be included in the MBS session generation request message when operating an NG-RAN that conducts RAN sharing between operators, and may be used as information for recognizing a situation in which the same broadcast service data is transmitted by the RAN sharing NG-RAN (or MOCN NG-RAN).

The MB-SMF may generate an N4mb session (N4mb session request/response) in step 404, and may deliver a response (Nnef_MBSSession_Create response and Nmbsmf_MBSSession_Create response) regarding steps 402 and 403 to the AF in steps 405a and 406a. Alternatively, a response regarding the AF may be delivered to the AF in a situation in which broadcast session generation is finished in the MBS network as in steps 405b and 406b.

Upon receiving a request for MBS session generation for a broadcast service, the MB-SMF may transmit a broadcast session context generation request message (Namf_Broadcast_ContextCreate_request) including a TMGI for selecting an NG-RAN corresponding to the MBS service area to the AMF in step 407. In addition, the broadcast session context generation request message may include a lower layer source specific IP multicast (LL SSM) address if the MB-UPF transmits data to NG-RANs through multicast. In addition, the broadcast session context generation request message may include an MBS service area. Furthermore, the broadcast session context generation request message may include a received broadcast service ID or a list of TMGIs that provide the same broadcast service.

In step 408, the AMF may transmit an N2 message request to the NG-RAN by using the message received from the MB-SMF. The N2 message request may include a TMGI and, if the MB-UPF transmits data to NG-RANs through multicast, a lower layer source specific IP multicast (LL SSM) address. In addition, the N2 message request may include an MBS service area, and may include a service type set as a broadcast service. Furthermore, the N2 message request may include a received broadcast service ID or a list of TMGIs that provide the same broadcast service. According to an embodiment of the disclosure, the N2 message request in step 408 may include a broadcast service ID received only if the NG-RAN is a RAN sharing NG-RAN (shared RAN) (or MOCN NG-RAN) or a list of TMGIs that provide the same broadcast service. Obviously, the above example is not limitative.

In step 409, the NG-RAN may generate MBS session context for a broadcast service. Particularly, if the NG-RAN is a RAN sharing NG-RAN (or MOCN NG-RAN), the primary TMGI to be used by the NG-RAN to transmit broadcast data actually may be selected, and may be included in the MBS session context.

The RAN sharing NG-RAN (or MOCN NG-RAN) may select a TMGI for a broadcast service provided by an operator who owns the NG-RAN, as the primary TMGI. Alternatively, the RAN sharing NG-RAN (or MOCN NG-RAN) may select a TMGI for a broadcast service provided by an operator deemed to provide the service to a larger number of UEs in the MBS service area, among operators who share the NG-RAN with each other, as the primary TMGI. Alternatively, the RAN sharing NG-RAN (or MOCN NG-RAN) may select a TMGI for a broadcast service provided by an operator who has the highest degree of importance or the highest degree of facility contribution, among operators who share the NG-RAN with each other and thus provide the same broadcast service, as the primary TMGI.

In addition, if LL SSM information has been received from the MB-SMF through steps 407 and 408, the NG-RAN may make a join request in order to receive broadcast service data from the MB-UPF through multicast. However, in the case of a RAN sharing NG-RAN (or MOCN NG-RAN), and if the operator network's TMGI is different from the primary TMGI, the NG-RAN may make no join request.

Through steps 410 and 411, the NG-RAN may send a response (N2 message response and broadcast session context generation response (Namf_Broadcast_ContextCreate_response)) regarding steps 407 and 408 to the MB-SMF through the AMF and may send TMGI information and information of an N3mb DL tunnel for receiving data to the NG-RAN, thereby making a tunnel for delivering broadcast service data between the NG-RAN and the MB-UPF. If the NG-RAN is a RAN sharing NG-RAN (or MOCN NG-RAN), the message in steps 410 and 411 may include some or all of a broadcast service ID or primary TMGI information or the location of the NG-RAN. Location information of the NG-RAN may include the NG-RAN's ID or cell ID or geographical location information or geographical address information. Obviously, the above example is not limitative.

Meanwhile, the MB-SMF may undergo an MBS session management (SM) policy update process as in steps 412 and 413 in order to check whether or not it is allowed to provide a service with the primary TMGI in the case of a RAN sharing NG-RAN (or MOCN NG-RAN) as a result of making a request to the MB-PCF or PCF. The MBS SM policy update message may include some or all of a broadcast service ID or primary TMGI information or the location of the NG-RAN, in addition to the TMGI. Obviously, the above example is not limitative.

Upon receiving a response indicating that it is possible to provide a service with the primary TMGI in the case of a RAN sharing NG-RAN, the MB-SMF may make a tunnel (N4mb session update) for delivering broadcast service data between the NG-RAN and the MB-UPF as in step 414, and may deliver a response (Nmbsmf_MBSSession_Create response and Nnef_MBSSession_Create response) regarding steps 402 and 403 to the AF, as in steps 405b and 406b. The message in steps 405b and 406b may include some or all of a broadcast service ID or primary TMGI information or the location of the NG-RAN. Location information of the NG-RAN may include the NG-RAN's ID or cell ID or geographical location information or geographical address information.

Meanwhile, in step 415, the RAN sharing NG-RAN (or MOCN NG-RAN) broadcasts such that broadcast service data is transmitted through the primary TMGI determined in step 409, instead of the TMGI.

Meanwhile, in order to provide a broadcast service through RAN sharing NG-RAN (or MOCN NG-RAN), the AF may provide UEs with updated information through an MBS service announcement in order to indicate use of the primary TMGI instead of the TMGI.

The MBS service announcement may include some or all of a broadcast service ID or primary TMGI information or the location of the NG-RAN or an MBS frequency selection area ID or a session description protocol, in addition to TMGI information. Location information of the NG-RAN may include at least one of the NG-RAN's ID or cell ID or geographical location information or geographical address information.

The RAN sharing NG-RAN (or MOCN NG-RAN) may transmit traffic only with regard to broadcast service data received with the primary TMGI, even if broadcast service data is received with the TMGI, as in step 417.

Meanwhile, in step 419, the UE which has received information regarding primary TMGI use through step 416 may receive broadcast service data through the primary TMGI when located in the RAN sharing NG-RAN (or MOCN NG-RAN).

That is, if the TMGI and the primary TMGI are different in FIG. 4, broadcast data transmission using the TMGI in the MOCN NG-RAN may be stopped, and the NG-RAN may select the primary TMGI.

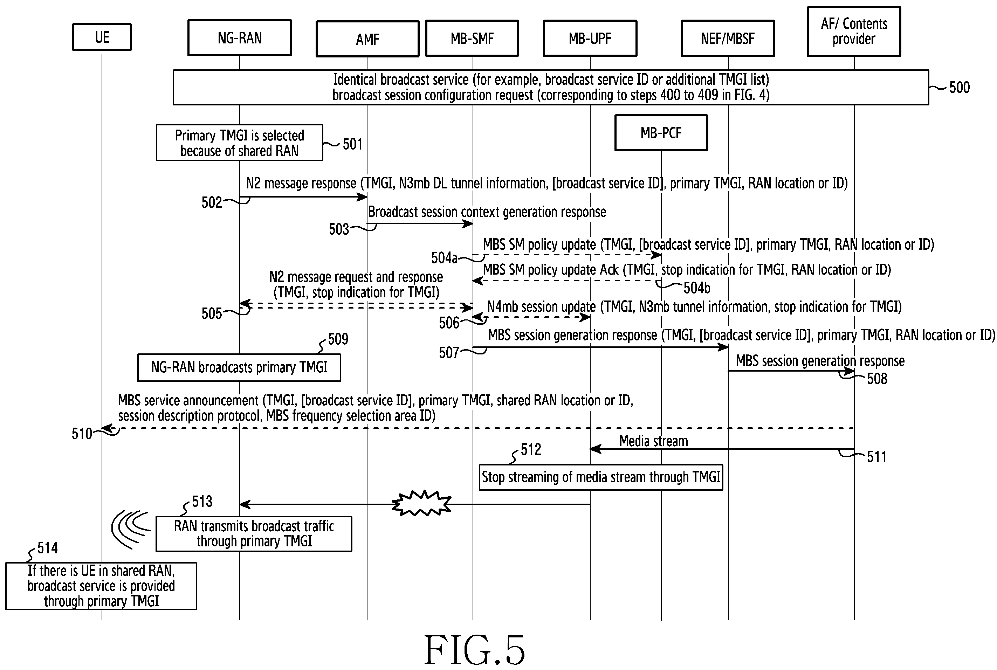

FIG. 5 illustrates processes of another method wherein, when an identical broadcast service is provided through an NG-RAN that conducts RAN sharing in a wireless communication system according to an embodiment of the disclosure, and when a broadcast session for a broadcast service is generated, the NG-RAN is prevented from sending overlapping broadcast data.

In step 500, the AF may start a process of requesting broadcast session generation for a broadcast service by performing the same operations as in steps 400-409 in FIG. 4.

In step 501, the RAN sharing NG-RAN (or MOCN NG-RAN) may select a primary TMGI to be used by the NG-RAN to transmit broadcast data actually. The primary TMGI may be included in MBS session context.

The RAN sharing NG-RAN (or MOCN NG-RAN) may select a TMGI for a broadcast service provided by an operator who owns the NG-RAN, as the primary TMGI. Alternatively, the RAN sharing NG-RAN (or MOCN NG-RAN) may select a TMGI for a broadcast service provided by an operator deemed to provide the service to a larger number of UEs in the MBS service area, among operators who share the NG-RAN with each other, as the primary TMGI. Alternatively, the RAN sharing NG-RAN (or MOCN NG-RAN) may select a TMGI for a broadcast service provided by an operator who has the highest degree of importance or the highest degree of facility contribution, among operators who share the NG-RAN with each other and thus provide the same broadcast service, as the primary TMGI.

Through steps 502 and 503, the NG-RAN may send a response to the MB-SMF through the AMF and may send TMGI information and information of an N3mb DL tunnel for receiving data to the NG-RAN (through an N2 message response and a broadcast session context generation response (Namf_Broadcast_ContextCreate_response)), thereby making a tunnel for delivering broadcast service data between the NG-RAN and the MB-UPF. If the NG-RAN is a RAN sharing NG-RAN (or MOCN NG-RAN), the message in steps 502 and 503 may include some or all of a broadcast service ID or primary TMGI information or the location of the NG-RAN. Location information of the NG-RAN may include at least one of the NG-RAN's ID or cell ID or geographical location information or geographical address information.

Meanwhile, the MB-SMF may undergo an MBS SM policy update process as in steps 504a and 504b in order to check whether or not it is allowed to provide a service with the primary TMGI in the case of a RAN sharing NG-RAN (or MOCN NG-RAN) as a result of making a request to the MB-PCF or PCF, and whether or not to stop delivering broadcast service data to the NG-RAN with the TMGI. The message for MBS SM policy update may include some or all of a broadcast service ID or primary TMGI information or the location of the NG-RAN, in addition to the TMGI.

Upon receiving a response indicating that it is possible to provide a service with the primary TMGI in the case of a RAN sharing NG-RAN, and delivery of broadcast service data to the NG-RAN with the TMGI is to be stopped, the MB-SMF performs steps 505 and 506.

For example, the response in step 504b indicating that it is possible to provide a service with the primary TMGI in the case of a RAN sharing NG-RAN, and delivery of broadcast service data to the NG-RAN with the TMGI is to be stopped may include an indicator such as "stop indication for TMGI".

In step 505, the MB-SMF may send an N2 message (N2 message request/response) to the RAN sharing NG-RAN through the AMF and may send indicator "stop indication for TMGI" together with the TMGI, thereby indicating stopped delivery of broadcast service data to the NG-RAN with the TMGI. In addition, in step 506, an N4mb session update process may be performed to make a tunnel for delivering broadcast service data between the NG-RAN and the MB-UPF. The N4mb session update message may include a TMGI and N3mb DL tunnel information, and may further include indicator "stop indication for TMGI". Alternatively, the MB-SMF or MB-UPF may delete N3mb DL tunnel information, and may stop delivering broadcast service data to the NG-RAN with the TMGI.

Meanwhile, the MB-SMF may deliver a response to the MBS session generation request in step 500 to the AF (Nmbsmf_MBSSession_Create response and Nnef_MBSSession_Create response) as in steps 507 and 508.

The message in steps 507 and 508 may include some or all of a broadcast service ID or primary TMGI information or the location of the NG-RAN. Location information of the NG-RAN may include at least one of the NG-RAN's ID or cell ID or geographical location information or geographical address information.

Meanwhile, in step 509, the RAN sharing NG-RAN (or MOCN NG-RAN) may broadcast (advertise the primary TMGI) such that broadcast service data is transmitted through the primary TMGI determined in step 501, instead of the TMGI.

Meanwhile, in order to provide a broadcast service through the RAN sharing NG-RAN (or MOCN NG-RAN), the AF may provide UEs with updated information through an MBS service announcement in order to indicate use of the primary TMGI instead of the TMGI.

The MBS service announcement may include some or all of a broadcast service ID or primary TMGI information or the location of the NG-RAN or an MBS frequency selection area ID or a session description protocol, in addition to TMGI information. Location information of the NG-RAN may include at least one of the NG-RAN's ID or cell ID or geographical location information or geographical address information.

Therefore, even if broadcast service data (media stream) is received with the TMGI as in step 511, the MB-UPF does not transmit broadcast service data to the RAN sharing NG-RAN (or MOCN NG-RAN) if the TMGI is different from the primary TMGI as in step 512.

Instead, in step 513, broadcast service data may be transmitted only through the primary TMGI. Therefore, a UE informed of primary TMGI use through step 510 becomes able to receive broadcast service data through the primary TMGI if located in the RAN sharing NG-RAN (or MOCN NG-RAN).

That is, according to the embodiment in FIG. 5, if the TMGI and the primary TMGI are different, broadcast data transmission to the MOCN NG-RAN may stop.

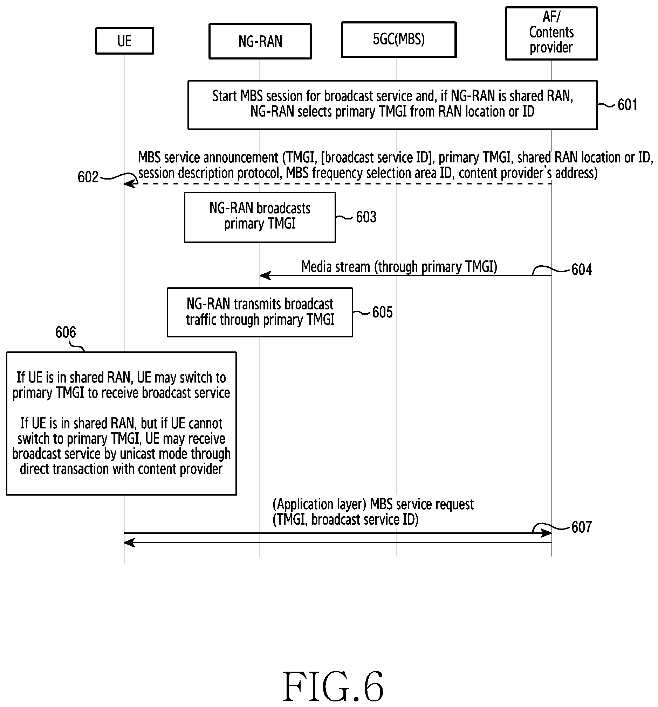

FIG. 6 illustrates processes of a method wherein, when an identical broadcast service is provided through an NG-RAN that conducts RAN sharing in a wireless communication system according to an embodiment of the disclosure, and when the NG-RAN is prevented from sending overlapping broadcast data when generating a broadcast session for a broadcast service, a UE is enabled to continuously receive the broadcast service even in the NG-RAN that conducts RAN sharing.

In step 601, an MBS session has been generated with regard to the broadcast service, and the RAN sharing NG-RAN may deliver an MBS service announcement to the UE such that the primary TMGI is selected according to embodiments of the disclosure, and the service is received through the primary TMGI.

The MBS service announcement may include some or all of a broadcast service ID or primary TMGI information or the location of the NG-RAN or an MBS frequency selection area ID or a session description protocol or address information of the content provider, in addition to TMGI information. Location information of the NG-RAN may include the NG-RAN's ID or cell ID or geographical location information or geographical address information.

Steps 602 to 605 correspond to above descriptions, and detailed descriptions thereof will be omitted herein.

Therefore, as in step 605, the RAN sharing NG-RAN may transmit broadcast service data only through the primary TMGI.

If the UE is in the RAN sharing NG-RAN, the UE may attempt to receive broadcast service data through the primary TMGI (If UE is in the shared RAN, UE may switch to primary TMGI to get the broadcast service). However, if the UE cannot switch to the primary TMGI, the UE may receive broadcast service data in a unicast mode through direct transaction between the UE and the content provider, as in step 607, by using the content provider's address (If UE is in the shared RAN, but UE can not switch to primary TMGI, it may get the broadcast service by unicast mode via direct transaction with contents provider).

In FIG. 6, while the RAN sharing NG-RAN broadcasts the primary TMGI through a shared channel, if a service is provided by additionally informing the UE of TMGI values (that is, TMGI list) in the operator network that provides the same broadcast service through the shared channel, the UE may receive broadcast service data by using original TMGI information used to receive the service in the UE's own network.

That is, according to the embodiment in FIG. 6, if the UE has difficulty in changing the primary TMGI in the MOCN NG-RAN, the UE may operate in the unicast mode, and the UE may change to the primary TMGI and then receive the broadcast service.

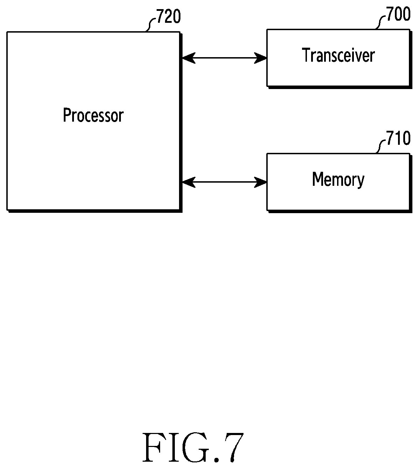

FIG. 7 is a block diagram illustrating a structure of a UE according to an embodiment of the disclosure.

As illustrated in FIG. 7, a UE of the disclosure may include a processor 720, a transceiver 700, and a memory 710. However, components of the UE are not limited to the above-described example. For example, the UE may include a larger or smaller number of components than the above-described components. In addition, the processor 720, the transceiver 700, and the memory 710 may be implemented in the form of a single chip.

According to an embodiment of the disclosure, the processor 720 may control a series of processes so that the UE can operate according to the above-described embodiments of the disclosure. For example, the processor 720 may control the components of the UE in order to perform the methods for providing broadcast services according to the above-described embodiments. The processor 720 may control the components of the UE to perform the embodiments of the disclosure by executing the programs stored in the memory 710. In addition, the processor 720 may be an application processor (AP), a communication processor (CP), a circuit, an application-specific circuit, or at least one processor.

According to an embodiment of the disclosure, the transceiver 700 may transmit/receive signals with network entities, other UEs, or base stations. The signals transmitted/received with network entities, other UEs, or base stations may include control information and data. The transceiver 700 may include an RF transmitter configured to up-convert and amplify the frequency of transmitted signals, an RF receiver configured to low-noise-amplify received signals and down-convert the frequency thereof, and the like. However, this is only an embodiment of the transceiver 700, and the components of the transceiver 700 are not limited to the RF transmitter and the RF receiver. In addition, the transceiver 700 may receive signals through a radio channel, output the same to the processor 720, and transmit signals output from the processor 720 through the radio channel.

According to an embodiment of the disclosure, the memory 710 may store programs and data necessary for operations of the UE. In addition, the memory 710 may store control information or data included in signals transmitted/received by the UE. The memory 710 may include storage media such as a ROM, a RAM, a hard disk, a CD-ROM, and a DVD, or a combination of storage media. In addition, the memory 710 may include multiple memories. Furthermore, according to an embodiment, the memory 710 may store programs for executing the above-described methods for providing broadcast services.

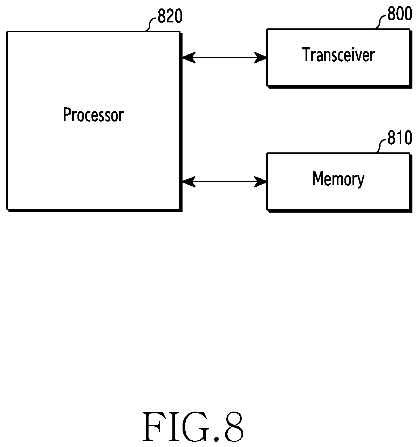

FIG. 8 is a block diagram illustrating a structure of a base station according to an embodiment of the disclosure.

As illustrated in FIG. 8, a base station of the disclosure may include a processor 820, a transceiver 800, and a memory 810. However, components of the base station are not limited to the above-described example. For example, the base station may include a larger or smaller number of components than the above-described components. In addition, the processor 820, the transceiver 800, and the memory 810 may be implemented in the form of a single chip.

According to an embodiment of the disclosure, the processor 820 may control a series of processes so that the base station can operate according to the above-described embodiments of the disclosure. For example, the processor 820 may control the components of the base station in order to provide broadcast services according to the above-described embodiments. The processor 820 may control the components of the base station to perform the embodiments of the disclosure by executing the programs stored in the memory 810. In addition, the processor 820 may be an application processor (AP), a communication processor (CP), a circuit, an application-specific circuit, or at least one processor.

According to an embodiment of the disclosure, the transceiver 800 may transmit/receive signals with network entities, other base stations, or UEs. The signals transmitted/received with network entities, other base stations, or UEs may include control information and data. The transceiver 800 may include an RF transmitter configured to up-convert and amplify the frequency of transmitted signals, an RF receiver configured to low-noise-amplify received signals and down-convert the frequency thereof, and the like. However, this is only an embodiment of the transceiver 800, and the components of the transceiver 800 are not limited to the RF transmitter and the RF receiver. In addition, the transceiver 800 may receive signals through a radio channel, output the same to the processor 820, and transmit signals output from the processor 820 through the radio channel.

According to an embodiment of the disclosure, the memory 810 may store programs and data necessary for operations of the base station. In addition, the memory 810 may store control information or data included in signals transmitted/received by the base station. The memory 810 may include storage media such as a ROM, a RAM, a hard disk, a CD-ROM, and a DVD, or a combination of storage media. In addition, the memory 810 may include multiple memories. Furthermore, according to an embodiment, the memory 810 may store programs for executing the above-described methods for providing broadcast services.

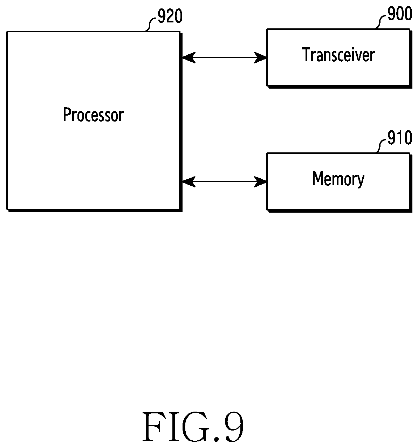

FIG. 9 is a block diagram illustrating a structure of a network entity according to an embodiment of the disclosure.

As illustrated in FIG. 9, a network entity of the disclosure may include a processor 920, a transceiver 900, and a memory 910. However, components of the network entity are not limited to the above-described example. For example, the network entity may include a larger or smaller number of components than the above-described components. In addition, the processor 920, the transceiver 900, and the memory 910 may be implemented in the form of a single chip.

According to an embodiment of the disclosure, the processor 920 may control a series of processes so that the NF can operate according to the above-described embodiments of the disclosure. For example, the processor 920 may control the components of the network entity in order to perform the methods for providing broadcast services according to the above-described embodiments. The processor 920 may control the components of the network entity to perform the embodiments of the disclosure by executing the programs stored in the memory 910. In addition, the processor 920 may be an application processor (AP), a communication processor (CP), a circuit, an application-specific circuit, or at least one processor.

According to an embodiment of the disclosure, the transceiver 900 may transmit/receive signals with other network entities, base stations, or UEs. The signals transmitted/received with other network entities or UEs may include control information and data. The transceiver 900 may include an RF transmitter configured to up-convert and amplify the frequency of transmitted signals, an RF receiver configured to low-noise-amplify received signals and down-convert the frequency thereof, and the like. However, this is only an embodiment of the transceiver 900, and the components of the transceiver 900 are not limited to the RF transmitter and the RF receiver. In addition, the transceiver 900 may receive signals through a radio channel, output the same to the processor 920, and transmit signals output from the processor 920 through the radio channel.

According to an embodiment of the disclosure, the memory 910 may store programs and data necessary for operations of the network entity. In addition, the memory 910 may store control information or data included in signals transmitted/received by the network entity. The memory 910 may include storage media such as a ROM, a RAM, a hard disk, a CD-ROM, and a DVD, or a combination of storage media. In addition, the memory 910 may include multiple memories. Furthermore, according to an embodiment, the memory 910 may store programs for executing the above-described methods for providing broadcast services.

According to an embodiment of the disclosure, a method for providing a broadcast service of an MB-SMF may include the steps of: assigning a TMGI in order to provide a broadcast service to be provided to a UE and delivering the same to an AF; receiving an MBS session generation request corresponding to the TMGI; in response to the MBS session generation request, transmitting a broadcast session context generation request message including the TMGI to an AMF; receiving N3mb DL tunnel information from an NG-RAN through the AMF; and transmitting the N3mb DL tunnel information to an MB-UPF.

According to an embodiment of the disclosure, a method performed by a multicast/broadcast session management function (MB-SMF) in a wireless communication system may include the steps of: assigning a first temporary mobile group identity (TMGI) for a broadcast service to an application function (AF); receiving, from the AF, a multicast and broadcast services (MBS) session generation request message corresponding to the first TMGI, wherein the MBS session generation request message including the first TMGI and at least one of an ID of the broadcast service or a second TMGI list for an identical broadcast service as the first TMGI; transmitting, to the AF, a response message regarding the MBS session generation request message; transmitting, to an access and mobility management function (AMF), a broadcast session context generation request message, wherein the broadcast session context generation request message including the first TMGI and at least one of the ID of the broadcast service or the second TMGI list; receiving a response message from a base station through the AMF, wherein the response message including a primary TMGI to be used by the base station to provide the broadcast service; determining whether the base station is allowed to provide a broadcast service through the primary TMGI; controlling a tunnel to be generated between the base station and an MB-user plane function (UPF) for providing the broadcast service, based on the determination result; and providing, to the AF, a response message including the primary TMGI. The primary TMGI may be selected by the base station, based on the first TMGI and at least one of the ID of the broadcast service or the second TMGI list.

The first TMGI may include information regarding a user providing the broadcast service, and the base station may be a radio access network (RAN) sharing NG-RAN or multi-operator core network (MOCN) NG-RAN.

In the step of determining whether the base station is allowed to provide a broadcast service through the primary TMGI, an MBS session management (SM) policy update procedure may be performed with a policy control function (PCF) or MB-PCF to determine whether the broadcast service is allowed through the primary TMGI.

The broadcast session context generation request message may include information regarding an MBS service area and, in case that data is transmitted from the MB-UPF to the base station by multicast, a lower layer source specific IP multicast (LL SSM) address.

A TMGI used to provide the broadcast service by an operator who owns the base station, an operator deemed to provide the broadcast service to a larger number of user terminals in an MBS service area among operators who share the base station, or an operator having the highest degree of importance among operators who share the base station, may be selected as the primary TMGI.

According to an embodiment of the disclosure, a method performed by a base station in a wireless communication system may include the steps of: receiving, from an access and mobility management function (AMF), an N2 message request based on a multicast and broadcast services (MBS) session generation request of a multicast/broadcast session management function (MB-SMF), wherein the N2 message request including a first temporary mobile group identity (TMGI) for a broadcast service and at least one of an ID of the broadcast service or a second TMGI list for an identical broadcast service as the first TMGI; selecting a primary TMGI to be used to provide the broadcast service, based on the first TMGI and at least one of the ID of the broadcast service or the second TMGI list; transmitting, to the AMF, an N2 message response including the primary TMGI; and receiving data corresponding to the broadcast service, based on the primary TMGI.

The first TMGI may include information regarding a user providing the broadcast service, and the base station may be a radio access network (RAN) sharing NG-RAN or multi-operator core network (MOCN) NG-RAN.

The N2 message response may include information regarding a tunnel between the base station and an MB-user plane function (UPF) for receiving data corresponding to the broadcast service to the base station, and data may not be received from the MB-UPF through a TMGI not selected as the primary TMGI.

The method may further include a step of transmitting an MBS service announcement to at least one terminal, the MBS service announcement including at least one of the ID of the broadcast service, the primary TMGI, or location information of the base station.

A TMGI used to provide the broadcast service by an operator who owns the base station, an operator deemed to provide the broadcast service to a larger number of user terminals in an MBS service area among operators who share the base station, or an operator having the highest degree of importance among operators who share the base station, may be selected as the primary TMGI.

According to an embodiment of the disclosure, a multicast/broadcast session management function (MB-SMF) device of a wireless communication system may include a transceiver and at least one processor. The at least one processor may be configured to: assign a first temporary mobile group identity (TMGI) for a broadcast service to an application function (AF); receive, from the AF, a multicast and broadcast services (MBS) session generation request message corresponding to the first TMGI, wherein the MBS session generation request message including the first TMGI and at least one of an ID of the broadcast service or a second TMGI list for an identical broadcast service as the first TMGI, transmit, to the AF, a response message regarding the MBS session generation request message, transmit, to an access and mobility management function (AMF), a broadcast session context generation request message, wherein the broadcast session context generation request message including the first TMGI and at least one of the ID of the broadcast service or the second TMGI list; receive a response message from a base station through the AMF, wherein the response message including a primary TMGI to be used by the base station to provide the broadcast service, determine whether the base station is allowed to provide a broadcast service through the primary TMGI, control a tunnel to be generated between the base station and an MB-user plane function (UPF) for providing the broadcast service, based on the determination result, and provide a response message including the primary TMGI to the AF. The primary TMGI may be selected by the base station, based on the first TMGI and at least one of the ID of the broadcast service or the second TMGI list.

The first TMGI may include information regarding a user providing the broadcast service, and the base station may be a radio access network (RAN) sharing NG-RAN or multi-operator core network (MOCN) NG-RAN.

The at least one processor may be configured to perform an MBS session management (SM) policy update procedure with a policy control function (PCF) or MB-PCF to determine whether the broadcast service is allowed through the primary TMGI.

The broadcast session context generation request message may include information regarding an MBS service area and, in case that data is transmitted from the MB-UPF to the base station by multicast, a lower layer source specific IP multicast (LL SSM) address.

A base station of a wireless communication system may include a transceiver and at least one processor. The at least one processor may be configured to: receive, from an access and mobility management function (AMF), an N2 message request based on a multicast and broadcast services (MBS) session generation request of a multicast/broadcast session management function (MB-SMF, wherein the N2 message request including a first temporary mobile group identity (TMGI) for a broadcast service and at least one of an ID of the broadcast service or a second TMGI list for an identical broadcast service as the first TMGI, select a primary TMGI to be used to provide the broadcast service, based on the first TMGI and at least one of the ID of the broadcast service or the second TMGI list; transmit, to the AMF, an N2 message response including the primary TMGI to the AMF; and receive data corresponding to the broadcast service, based on the primary TMGI.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented.

## Claims

1. A method performed by a multicast/broadcast session management function, MB-SMF, in a wireless communication system, the method comprising:
assigning a first temporary mobile group identity, TMGI, for a broadcast service to an application function, AF;
receiving, from the AF, a multicast and broadcast services, MBS, session generation request message corresponding to the first TMGI, wherein the MBS session generation request message comprising the first TMGI and at least one of an ID of the broadcast service or a second TMGI list for an identical broadcast service as the first TMGI;
transmitting, to the AF, a response message regarding the MBS session generation request message;
transmitting, to an access and mobility management function, AMF, a broadcast session context generation request message, wherein the broadcast session context generation request message comprising the first TMGI and at least one of the ID of the broadcast service or the second TMGI list;
receiving a response message from a base station through the AMF, wherein the response message comprising a primary TMGI to be used by the base station to provide the broadcast service;
determining whether the base station is allowed to provide a broadcast service through the primary TMGI;
controlling a tunnel to be generated between the base station and an MB-user plane function, UPF,
for providing the broadcast service, based on the determination result; and
providing, to the AF, a response message comprising the primary TMGI,
wherein the primary TMGI is selected by the base station, based on the first TMGI and at least one of the ID of the broadcast service or the second TMGI list.

2. The method of claim 1, wherein the first TMGI comprises information regarding a user providing the broadcast service, and
wherein the base station is a radio access network, RAN, sharing NG-RAN or multi-operator core networkj MOCN, NG-RAN.

3. The method of claim 1, wherein, determining whether the base station is allowed to provide a broadcast service through the primary TMGI comprises, performing an MBS session management, SM, policy update procedure with a policy control function, PCF, or MB-PCF to determine whether the broadcast service is allowed through the primary TMGI.

4. The method of claim 1, wherein the broadcast session context generation request message comprises information regarding an MBS service area and, in case that data is transmitted from the MB-UPF to the base station by multicast, a lower layer source specific IP multicast, LL SSM, address.

5. The method of claim 1, wherein a TMGI used to provide the broadcast service by an operator who owns the base station, an operator deemed to provide the broadcast service to a larger number of user terminals in an MBS service area among operators who share the base station, or an operator having the highest degree of importance among operators who share the base station, is selected as the primary TMGI.

6. A method performed by a base station in a wireless communication system, the method comprising:
receiving, from an access and mobility management function, AMF, an N2 message request based on a multicast and broadcast servicesa MBS, session generation request of a multicast/broadcast session management functionj MB-SMF, wherein the N2 message request comprising a first temporary mobile group identity, TMGI, for a broadcast service and at least one of an ID of the broadcast service or a second TMGI list for an identical broadcast service as the first TMGI;
selecting a primary TMGI to be used to provide the broadcast service, based on the first TMGI and at least one of the ID of the broadcast service or the second TMGI list;
transmitting, to the AMF, an N2 message response comprising the primary TMGI; and
receiving data corresponding to the broadcast service, based on the primary TMGI.

7. The method of claim 6, wherein the first TMGI comprises information regarding a user providing the broadcast service, and
wherein the base station is a radio access network, RAN, sharing NG-RAN or multi-operator core network, MOCN, NG-RAN.

8. The method of claim 6, wherein the N2 message response comprises information regarding a tunnel between the base station and an MB-user plane function, UPF, for receiving data corresponding to the broadcast service to the base station, and
wherein data is not received from the MB-UPF through a TMGI not selected as the primary TMGI.

9. The method of claim 6, further comprising transmitting, to at least one terminal, an MBS service announcement, wherein the MBS service announcement comprising at least one of the ID of the broadcast service, the primary TMGI, or location information of the base station.

10. The method of claim 6, wherein selecting a primary TMGI comprises: selecting a TMGI used to provide the broadcast service by an operator who owns the base station, an operator deemed to provide the broadcast service to a larger number of user terminals in an MBS service area among operators who share the base station, or an operator having the highest degree of importance among operators who share the base station, as the primary TMGI.

11. A multicast/broadcast session management function, MB-SMF, device of a wireless communication system, the MB-SMF device comprising:
a transceiver; and
at least one processor,
wherein the at least one processor is configured to:
assign a first temporary mobile group identity, TMGI, for a broadcast service to an application function, AF;
receive, from the AF, a multicast and broadcast services, MBS, session generation request message corresponding to the first TMGI, wherein the MBS session generation request message comprising the first TMGI and at least one of an ID of the broadcast service or a second TMGI list for an identical broadcast service as the first TMGI;
transmit, to the AF, a response message regarding the MBS session generation request message to the AF;
transmit, to an access and mobility management function, AMF, a broadcast session context generation request message, wherein the broadcast session context generation request message comprising the first TMGI and at least one of the ID of the broadcast service or the second TMGI list,
receive a response message from a base station through the AMF, wherein the response message comprising a primary TMGI to be used by the base station to provide the broadcast service,
determine whether the base station is allowed to provide a broadcast service through the primary TMGI,
control a tunnel to be generated between the base station and an MB-user plane function, UPF,
for providing the broadcast service, based on the determination result, and
provide, to the AF, a response message comprising the primary TMGI, and
wherein the primary TMGI is selected by the base station, based on the first TMGI and at least one of the ID of the broadcast service or the second TMGI list.

12. The device of claim 11, wherein the first TMGI comprises information regarding a user providing the broadcast service, and
wherein the base station is a radio access network, RAN, sharing NG-RAN or multi-operator core network, MOCN, NG-RAN.

13. The device of claim 11, wherein the at least one processor is configured to perform an MBS session management, SM, policy update procedure with a policy control function, PCF, or MB-PCF to determine whether the broadcast service is allowed through the primary TMGI.

14. The device of claim 11, wherein the broadcast session context generation request message comprises information regarding an MBS service area and, in case that data is transmitted from the MB-UPF to the base station by multicast, a lower layer source specific IP multicast, LL SSM, address.

15. A base station of a wireless communication system, the base station comprising:
a transceiver; and
at least one processor,
wherein the at least one processor is configured to:
receive, from an access and mobility management function, AMF, an N2 message request based on a multicast and broadcast services, MBS, session generation request of a multicast/broadcast session management function, MB-SMF, wherein the N2 message request comprising a first temporary mobile group identity, TMGI, for a broadcast service and at least one of an ID of the broadcast service or a second TMGI list for an identical broadcast service as the first TMGI,
select a primary TMGI to be used to provide the broadcast service, based on the first TMGI and at least one of the ID of the broadcast service or the second TMGI list,
transmit, to the AMF, an N2 message response comprising the primary TMGI, and
receive data corresponding to the broadcast service, based on the primary TMGI.

## Patentansprüche

1. Verfahren, das von einer Multicast-/Broadcast-Sitzungsverwaltungsfunktion, MB-SMF, in einem drahtlosen Kommunikationssystem durchgeführt wird, wobei das Verfahren umfasst:
Zuweisen einer ersten temporären mobilen Gruppenidentität, TMGI, für einen Broadcast-Dienst an eine Anwendungsfunktion, AF;
Empfangen einer Multicast- und Broadcast-Dienste-, MBS,-Sitzungserzeugungs-Anforderungsnachricht, die der ersten TMGI entspricht, von der AF, wobei die MBS-Sitzungserzeugungs-Anforderungsnachricht die erste TMGI und mindestens eine einer ID des Broadcast-Dienstes oder einer zweiten TMGI-Liste für einen identischen Broadcast-Dienst wie die erste TMGI umfasst;
Übertragen einer Antwortnachricht bezüglich der MBS-Sitzungserzeugungs-Anforderungsnachricht an die AF;
Übertragen einer Broadcast-Sitzungskontexterzeugungs-Anforderungsnachricht an eine Zugriffs- und Mobilitätsverwaltungsfunktion, AMF, wobei die Broadcast-Sitzungskontexterzeugungs-Anforderungsnachricht die erste TMGI und mindestens eine der ID des Broadcast-Dienstes oder der zweiten TMGI-Liste umfasst;
Empfangen einer Antwortnachricht von einer Basisstation über die AMF, wobei die Antwortnachricht eine primäre TMGI umfasst, die von der Basisstation zum Bereitstellen des Broadcast-Dienstes zu verwenden ist;
Bestimmen, ob es der Basisstation erlaubt ist, einen Broadcast-Dienst über die primäre TMGI bereitzustellen;
Steuern eines Tunnels, der zwischen der Basisstation und einer MB-Benutzerebenenfunktion, UPF, zum Bereitstellen des Broadcast-Dienstes zu erzeugen ist, basierend auf dem Bestimmungsergebnis; und
Bereitstellen einer die primäre TMGI umfassenden Antwortnachricht an die AF,
wobei die primäre TMGI durch die Basisstation basierend auf der ersten TMGI und mindestens einer der ID des Broadcast-Dienstes oder der zweiten TMGI-Liste ausgewählt wird.

2. Verfahren nach Anspruch 1, wobei die erste TMGI Informationen über einen Nutzer umfasst, der den Broadcast-Dienst bereitstellt, und
wobei es sich bei der Basisstation um ein ein Funkzugriffsnetzwerk, RAN, gemeinsam nutzendes NG-RAN oder ein NG-RAN für ein Kernnetzwerk mit mehreren Betreibern, MOCN, handelt.

3. Verfahren nach Anspruch 1, wobei das Bestimmen, ob es der Basisstation erlaubt ist, einen Broadcast-Dienst über die primäre TMGI bereitzustellen, Durchführen eines MBS-Sitzungsverwaltungs-, SM-, Richtlinienaktualisierungsverfahrens mit einer Richtliniensteuerungsfunktion, PCF oder MB-PCF umfasst, um zu bestimmen, ob der Broadcast-Dienst über die primäre TMGI erlaubt ist.

4. Verfahren nach Anspruch 1, wobei die Broadcast-Sitzungskontexterzeugungs-Anforderungsnachricht Informationen bezüglich eines MBS-Dienstbereichs und, falls Daten von der MB-UPF per Multicast an die Basisstation übertragen werden, eine Adresse für einen quellenspezifische IP-Multicast der unteren Schicht, LL SSM, umfasst.

5. Verfahren nach Anspruch 1, wobei als primäre TMGI eine TMGI ausgewählt wird, die zum Bereitstellen des Broadcast-Dienstes von einem Betreiber verwendet wird, dem die Basisstation gehört, von einem Betreiber, von dem angenommen wird, dass er den Broadcast-Dienst für eine größere Anzahl von Benutzerendgeräten in einem MBS-Dienstbereich unter Betreibern, die die Basisstation gemeinsam nutzen, bereitstellt, oder von einem Betreiber, der unter Betreibern, die die Basisstation gemeinsam nutzen, den höchsten Wichtigkeitsgrad aufweist.

6. Verfahren, das von einer Basisstation in einem drahtlosen Kommunikationssystem durchgeführt wird, wobei das Verfahren umfasst:
Empfangen, von einer Zugriffs- und Mobilitätsverwaltungsfunktion, AMF, einer N2-Nachrichtenanforderung basierend auf einer Multicast- und Broadcast-Dienste-, MBS,-Sitzungserzeugungsanforderung einer Multicast-/Broadcast-Sitzungsverwaltungsfunktion, MB-SMF, wobei die N2-Nachrichtenanforderung eine erste temporäre mobile Gruppenidentität, TMGI, für einen Broadcast-Dienst und mindestens eine einer ID des Broadcast-Dienstes oder einer zweiten TMGI-Liste für einen identischen Broadcast-Dienst wie die erste TMGI umfasst;
Auswählen einer primären TMGI, die zum Bereitstellen des Broadcast-Dienstes verwendet werden soll, basierend auf der ersten TMGI und mindestens einer der ID des Broadcast-Dienstes oder der zweiten TMGI-Liste;
Übertragen einer die primäre TMGI umfassenden N2-Nachrichtenantwort an die AMF; und
Empfangen von Daten, die dem Broadcast-Dienst entsprechen, basierend auf der primären TMGI.

7. Verfahren nach Anspruch 6, wobei die erste TMGI Informationen über einen Nutzer umfasst, der den Broadcast-Dienst bereitstellt, und
wobei es sich bei der Basisstation um ein ein Funkzugriffsnetzwerk, RAN, gemeinsam nutzendes NG-RAN oder ein NG-RAN für ein Kernnetzwerk mit mehreren Betreibern, MOCN, handelt.

8. Verfahren nach Anspruch 6, wobei die N2-Nachrichtenantwort Informationen bezüglich eines Tunnels zwischen der Basisstation und einer MB-Benutzerebenenfunktion, UPF, zum Empfangen von Daten, die dem Broadcast-Dienst entsprechen, zur Basisstation umfasst, und
wobei die Daten von der MB-UPF nicht über eine TMGI empfangen werden, die nicht als primäre TMGI ausgewählt wurde.

9. Verfahren nach Anspruch 6, ferner umfassend Übertragen einer MBS-Dienstankündigung an mindestens ein Endgerät, wobei die MBS-Dienstankündigung mindestens eine der ID des Broadcast-Dienstes, der primären TMGI oder von Standortinformationen der Basisstation umfasst.

10. Verfahren nach Anspruch 6, wobei das Auswählen einer primären TMGI umfasst: Auswählen einer TMGI, die zum Bereitstellen des Broadcast-Dienstes von einem Betreiber verwendet wird, dem die Basisstation gehört, von einem Betreiber, von dem angenommen wird, dass er den Broadcast-Dienst für eine größere Anzahl von Benutzerendgeräten in einem MBS-Dienstbereich unter Betreibern, die die Basisstation gemeinsam nutzen, bereitstellt, oder von einem Betreiber, der unter Betreibern, die die Basisstation gemeinsam nutzen, den höchsten Wichtigkeitsgrad aufweist.

11. Multicast-/Broadcast-Sitzungsverwaltungsfunktions-, MB-SMF,-Vorrichtung eines drahtlosen Kommunikationssystems, wobei die MB-SMF-Vorrichtung umfasst:
einen Transceiver; und
mindestens einen Prozessor,
wobei der mindestens eine Prozessor konfiguriert ist zum:
Zuweisen einer ersten temporären mobilen Gruppenidentität, TMGI, für einen Broadcast-Dienst an eine Anwendungsfunktion, AF;
Empfangen einer Multicast- und Broadcast-Dienste-, MBS,-Sitzungserzeugungs-Anforderungsnachricht, die der ersten TMGI entspricht, von der AF, wobei die MBS-Sitzungserzeugungs-Anforderungsnachricht die erste TMGI und mindestens eine einer ID des Broadcast-Dienstes oder einer zweiten TMGI-Liste für einen identischen Broadcast-Dienst wie die erste TMGI umfasst;
Übertragen, an die AF, einer Antwortnachricht bezüglich der MBS-Sitzungserzeugungs-Anforderungsnachricht an die AF;
Übertragen einer Broadcast-Sitzungskontexterzeugungs-Anforderungsnachricht an eine Zugriffs- und Mobilitätsverwaltungsfunktion, AMF, wobei die Broadcast-Sitzungskontexterzeugungs-Anforderungsnachricht die erste TMGI und mindestens eine der ID des Broadcast-Dienstes oder der zweiten TMGI-Liste umfasst,
Empfangen einer Antwortnachricht von einer Basisstation über die AMF, wobei die Antwortnachricht eine primäre TMGI umfasst, die von der Basisstation zum Bereitstellen des Broadcast-Dienstes zu verwenden ist,
Bestimmen, ob es der Basisstation erlaubt ist, einen Broadcast-Dienst über die primäre TMGI bereitzustellen,
Steuern eines Tunnels, der zwischen der Basisstation und einer MB-Benutzerebenenfunktion, UPF, zum Bereitstellen des Broadcast-Dienstes zu erzeugen ist, basierend auf dem Bestimmungsergebnis, und
Bereitstellen einer die primäre TMGI umfassenden Antwortnachricht an die AF, und
wobei die primäre TMGI durch die Basisstation basierend auf der ersten TMGI und mindestens einer der ID des Broadcast-Dienstes oder der zweiten TMGI-Liste ausgewählt wird.

12. Vorrichtung nach Anspruch 11, wobei die erste TMGI Informationen über einen Benutzer umfasst, der den Broadcast-Dienst bereitstellt, und
wobei es sich bei der Basisstation um ein ein Funkzugriffsnetzwerk, RAN, gemeinsam nutzendes NG-RAN oder ein RAN für ein Kernnetzwerk mit mehreren Betreibern, MOCN, NG-RAN, handelt.

13. Vorrichtung nach Anspruch 11, wobei der mindestens eine Prozessor konfiguriert ist, um eine MBS-Sitzungsverwaltungs-, SM-, Richtlinienaktualisierungsprozedur mit einer Richtliniensteuerungsfunktion, PCF oder MB-PCF durchführt, um zu bestimmen, ob der Broadcast-Dienst über die primäre TMGI erlaubt ist.

14. Vorrichtung nach Anspruch 11, wobei die Broadcast-Sitzungskontexterzeugungs-Anforderungsnachricht Informationen bezüglich eines MBS-Dienstbereichs und, falls Daten von der MB-UPF per Multicast an die Basisstation übertragen werden, eine Adresse für einen quellenspezifische IP-Multicast der unteren Schicht, LL SSM, umfasst.

15. Basisstation eines drahtlosen Kommunikationssystems, wobei die Basisstation umfasst:
einen Transceiver; und
mindestens einen Prozessor,
wobei der mindestens eine Prozessor konfiguriert ist zum:
Empfangen, von einer Zugriffs- und Mobilitätsverwaltungsfunktion, AMF, einer N2-Nachrichtenanforderung basierend auf einer Multicast- und Broadcast-Dienste-, MBS,-Sitzungserzeugungsanforderung einer Multicast-/Broadcast-Sitzungsverwaltungsfunktion, MB-SMF, wobei die N2-Nachrichtenanforderung eine erste temporäre mobile Gruppenidentität, TMGI, für einen Broadcast-Dienst und mindestens eine einer ID des Broadcast-Dienstes oder einer zweiten TMGI-Liste für einen identischen Broadcast-Dienst wie die erste TMGI umfasst,
Auswählen einer primären TMGI, die zum Bereitstellen des Broadcast-Dienstes verwendet werden soll, basierend auf der ersten TMGI und mindestens einer der ID des Broadcast-Dienstes oder der zweiten TMGI-Liste,
Übertragen einer die primäre TMGI umfassenden N2-Nachrichtenantwort an die AMF, und
Empfangen von Daten, die dem Broadcast-Dienst entsprechen, basierend auf der primären TMGI.

## Revendications

1. Procédé exécuté par une fonction de gestion de session de multi-diffusion/diffusion, SMF-MB, dans un système de communication sans fil, le procédé comprenant :
attribuer une première identité de groupe mobile temporaire, TMGI, pour un service de diffusion à une fonction d'application, AF ;
recevoir, de la part de l'AF, un message de demande de génération de session de services de multi-diffusion et de diffusion, MBS, correspondant à la première TMGI, dans lequel le message de demande de génération de session MBS comprend la première TMGI et au moins un d'un ID du service de diffusion ou d'une deuxième liste de TMGI pour un service de diffusion identique à la première TMGI ;
transmettre à l'AF un message de réponse concernant le message de demande de génération de session de MBS ;
transmettre, à une fonction de gestion d'accès et de mobilité, AMF, un message de demande de génération de contexte de session de diffusion, dans lequel le message de demande de génération de contexte de session de diffusion comprend la première TMGI et au moins un de l'ID du service de diffusion ou de la deuxième liste de TMGI ;
recevoir un message de réponse d'une station de base par l'intermédiaire de l'AMF, dans lequel le message de réponse comprend une TMGI primaire à utiliser par la station de base pour fournir le service de diffusion ;
déterminer si la station de base est autorisée à fournir un service de diffusion par l'intermédiaire de la TMGI primaire ;
commander un tunnel à générer entre la station de base et une fonction plan utilisateur MB, UPF, pour fournir le service de diffusion, en se basant sur le résultat de la détermination ; et
fournir à l'AF un message de réponse comprenant la TMGI primaire,
dans lequel la TMGI primaire est sélectionnée par la station de base, sur la base de la première TMGI et d'au moins un de l'ID du service de diffusion ou la deuxième liste de TMGI.

2. Procédé de la revendication 1, dans lequel la première TMGI comprend des informations concernant un utilisateur fournissant le service de diffusion, et
dans lequel la station de base est un NG-RAN partageant un réseau d'accès radio, RAN, ou un NG-RAN de réseau central multi-opérateurs, MOCN.

3. Procédé de la revendication 1, dans lequel la détermination du fait à savoir si la station de base est autorisée à fournir un service de diffusion par l'intermédiaire de la TMGI primaire comprend l'exécution d'une procédure de mise à jour de la politique de gestion de session MBS, SM, avec une fonction de contrôle de politique, PCF, ou PCF-MB, afin de déterminer si le service de diffusion est autorisé par l'intermédiaire de la TMGI primaire.

4. Procédé de la revendication 1, dans lequel le message de demande de génération de contexte de session de diffusion comprend des informations concernant une zone de service MBS et, dans le cas où les données sont transmises de l'UPF-MB à la station base par multi-diffusion, une adresse de multi-diffusion IP spécifique à la source de la couche inférieure, LL SSM.

5. Procédé de la revendication 1, dans lequel une TMGI utilisée pour fournir le service de diffusion par un opérateur propriétaire de la station de base, un opérateur réputé fournir le service de diffusion à un plus grand nombre de terminaux d'utilisateurs dans une zone de service MBS parmi les opérateurs qui partagent la station de base, ou un opérateur ayant le plus haut degré d'importance parmi les opérateurs qui partagent la station de base, est sélectionné en tant que TMGI primaire.

6. Procédé exécuté par une station de base dans un système de communication sans fil, le procédé comprenant :
recevoir, depuis une fonction de gestion d'accès et de mobilité, AMF, une demande de message N2 en se basant sur une demande de génération de session de services de multi-diffusion et de diffusion, MBS, d'une fonction de gestion de session de multi-diffusion/diffusion, SMF-MB, la demande de message N2 comprenant une première identité de groupe mobile temporaire, TMGI, pour un service de diffusion et au moins l'un d'un ID du service de diffusion ou d'une deuxième liste TMGI pour un service de diffusion identique à la première TMGI ;
sélectionner une TMGI primaire à utiliser pour fournir le service de diffusion, sur la base de la première TMGI et d'au moins un de l'ID du service de diffusion ou de la deuxième liste de TMGI ;
transmettre à l'AMF une réponse au message N2 comprenant la TMGI primaire ; et
recevoir des données correspondant au service de diffusion, en se basant sur la TMGI primaire.

7. Procédé de la revendication 6, dans lequel la première TMGI comprend des informations concernant un utilisateur fournissant le service de diffusion, et
dans lequel la station de base est un NG-RAN partageant un réseau d'accès radio, RAN, ou un NG-RAN de réseau central multi-opérateurs, MOCN.

8. Procédé de la revendication 6, dans lequel la réponse de message N2 comprend des informations concernant un tunnel entre la station de base et une fonction plan utilisateur MB, UPF, pour la réception de données correspondant au service de diffusion vers la station de base, et
dans lequel les données ne sont pas reçues depuis l'UPF-MB par l'intermédiaire d'une TMGI non sélectionnée comme TMGI primaire.

9. Procédé de la revendication 6, comprenant en outre la transmission, au moins à un terminal, d'une annonce de service MBS, dans lequel l'annonce de service MBS comprend au moins un de l'ID du service de diffusion, de la TMGI primaire ou d'informations de position de la station de base.

10. Procédé de la revendication 6, dans lequel la sélection d'une TMGI primaire : sélectionner la TMGI utilisée pour fournir le service de diffusion par un opérateur propriétaire de la station de base, un opérateur réputé fournir le service de diffusion à un plus grand nombre de terminaux d'utilisateurs dans une zone de service MBS parmi les opérateurs qui partagent la station de base, ou un opérateur ayant le plus haut degré d'importance parmi les opérateurs qui partagent la station de base, en tant que TMGI primaire.

11. Dispositif de fonction de gestion de multi-diffusion et de diffusion, SMF-MB, dans un système de communication sans fil, le dispositif de SMF-MB comprenant :
un émetteur-récepteur ; et
au moins un processeur,
dans lequel l'au moins un processeur est configuré pour :
attribuer une première identité de groupe mobile temporaire, TMGI, pour un service de diffusion à une fonction d'application, AF ;
recevoir, de la part de l'AF, un message de demande de génération de session de services de multi-diffusion et de diffusion, MBS, correspondant à la première TMGI, dans lequel le message de demande de génération de session MBS comprend la première TMGI et au moins un ID du service de diffusion ou une deuxième liste de TMGI pour un service de diffusion identique à la première TMGI ;
transmettre, à l'AF, un message de réponse concernant le message de demande de génération de session MBS à l'AF ;
transmettre, à une fonction de gestion d'accès et de mobilité, AMF, un message de demande de génération de contexte de session de diffusion, dans lequel le message de demande de génération de contexte de session de diffusion comprend la première TMGI et au moins un de l'ID du service de diffusion ou de la deuxième liste de TMGI,
recevoir un message de réponse d'une station de base par l'intermédiaire de l'AMF, dans lequel le message de réponse comprend une TMGI primaire à utiliser par la station de base pour fournir le service de diffusion,
déterminer si la station de base est autorisée à fournir un service de diffusion par l'intermédiaire de la TMGI primaire,
commander un tunnel à générer entre la station de base et une fonction plan utilisateur MB, UPF, pour fournir le service de diffusion, en se basant sur le résultat de la détermination, et
fournir à l'AF un message de réponse comprenant la TMGI primaire,
dans lequel la TMGI primaire est sélectionnée par la station de base, sur la base de la première TMGI et d'au moins un de l'ID du service de diffusion ou la deuxième liste de TMGI.

12. Dispositif de la revendication 11, dans lequel la première TMGI comprend des informations concernant un utilisateur fournissant le service de diffusion, et
dans lequel la station de base est un NG-RAN partageant un réseau d'accès radio, RAN, ou un NG-RAN de réseau central multi-opérateurs, MOCN.

13. Dispositif de la revendication 11, dans lequel l'au moins un processeur est configuré pour exécuter une procédure de mise à jour de politique de gestion de session MBS, SM, avec une fonction de contrôle de politique, PCF, ou PCF-MB pour déterminer si le service de diffusion est autorisé par l'intermédiaire de la TMGI primaire.

14. Dispositif de la revendication 11, dans lequel le message de demande de génération de contexte de session de diffusion comprend des informations concernant une zone de service MBS et, dans le cas où les données sont transmises de l'UPF-MB à la station base par multi-diffusion, une adresse de multi-diffusion IP spécifique à la source de la couche inférieure, LL SSM.

15. Station de base d'un système de communication sans fil, la station de base comprenant :
un émetteur-récepteur ; et
au moins un processeur,
dans lequel l'au moins un processeur est configuré pour :
recevoir, depuis une fonction de gestion d'accès et de mobilité, AMF, une demande de message N2 en se basant sur une demande de génération de session de services de multi-diffusion et de diffusion, MBS, d'une fonction de gestion de session de multi-diffusion/diffusion, MB-SMF, la demande de message N2 comprenant une première identité de groupe mobile temporaire, TMGI, pour un service de diffusion et au moins l'un d'un ID du service de diffusion ou d'une deuxième liste TMGI pour un service de diffusion identique à la première TMGI,
sélectionner une TMGI primaire à utiliser pour fournir le service de diffusion, sur la base de la première TMGI et d'au moins un de l'ID du service de diffusion ou de la deuxième liste de TMGI,
transmettre à l'AMF une réponse au message N2 comprenant la TMGI primaire, et
recevoir des données correspondant au service de diffusion, en se basant sur la TMGI primaire.
